Europäisches Patentamt

(19) European Patent Office

Office européen des brevets

(11) Publication number: **0 077 620**
**B1**

(12) **EUROPEAN PATENT SPECIFICATION**

(45) Date of publication of patent specification: **09.09.87**

(21) Application number: **82305334.3**

(22) Date of filing: **07.10.82**

(51) Int. Cl.⁴: **B 29 C 71/04,** H 01 B 3/44

(54) **Radiation processing of polymeric products.**

(30) Priority: **15.10.81 GB 8131144**

(43) Date of publication of application:
**27.04.83 Bulletin 83/17**

(45) Publication of the grant of the patent:
**09.09.87 Bulletin 87/37**

(84) Designated Contracting States:
**DE FR GB NL SE**

(56) References cited:
**FR-A-1 187 214**
**FR-A-1 220 200**
**FR-A-1 476 895**

**CHEMICAL ABSTRACTS, vol. 76, no. 24, 12th
June 1972, page 66, no. 142189m, Columbus
Ohio (USA); L. LEONOWICZ et al.: "Changes in
physical and chemical properties of Piviacid
chlorinated poly (Vinyl Chloride) and Argona
(Viscose) fibers due to radiational sterilization"**

**The file contains technical information
submitted after the application was filed and
not included in this specification**

(73) Proprietor: **BICC Public Limited Company
Devonshire House Mayfair Place
London W1X 5FH (GB)**

(72) Inventor: **Wills, Graham Boyce
70 Highview Road
Ealing London W.13. (GB)**
Inventor: **Bates, Philip Arthur
9 Broom Crescent
Tarvin Cheshire (GB)**

(74) Representative: **Poole, Michael John et al
BICC plc Patents and Licensing Department 38
Ariel Way Wood Lane
London W12 7DX (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

**Description**

This invention relates to the radiation-processing of products made wholly or in part from polymeric materials, an important application being the processing of insulated wires and cables.

It has long been known that many polymeric materials can be cross-linked, and certain physical properties, notably at high temperatures, thereby improved, by exposure to ionizing radiations. It is also well-known that unless the irradiation dose rate is high the cross-linking reaction may be inhibited by oxygen, and this effect has discouraged the use of the technique when electron-beam irradiation facilities have not been available.

When gamma-processing (which, with practicable sources, takes around half a day rather than the second or so for electron-beam irradiation) has been used for this purpose, it has been the practice to use gas-tight containers filled with nitrogen to ensure that irradiation took place under substantially oxygen-free conditions. This has numerous disadvantages, including

(1) that the expensive containers, which must fit both the products to be contained and the irradiation facility in which they are to be processed, are of limited application and liable to stand idle for long periods;

(2) that the containers, and unfillable spaces in them, represent wasted space in the irradiation facility and so wasted radiation flux;

(3) that the containers themselves absorb radiation;

(4) that seals are liable to leak, especially after many passes through the irradiation plant, leading to the need for regular monitoring to ensure effectiveness of the precautions; and

(5) that the containers add to the weights to be handled.

We have discovered that equivalent results can be obtained with much simpler and cheaper precautions.

In accordance with the invention, a method of radiation-processing a product made at least in part from an oxygen-sensitive cross-linkable polymeric material comprises sealing the product in a flexible container and subjecting it to gamma irradiation therein, the volume and permeability of the flexible container being such that the ratio of the sum of the volume of oxygen contained in it and the volume of oxygen that will diffuse into it during the irradiation period to the exposed surface area of the polymeric material is less than a critical value to be determined empirically for the particular polymeric material.

In principle the critical value of the ratio depends upon the formulation of the polymeric material and the irradiation dose and length of the irradiation time, but as the dose rate in gamma-irradiation plant is relatively constant at about 0.5 Mrad/hr and total dose required is largely determined by the material, formulation is ordinarily the only significant factor. For PVC-coated wires with conventional radiation sensitisers the critical ratio can be expected to be in the range 50 to 150 $cm^3$ per $m^2$ of exposed PVC surface, depending on the grade (softer grades demanding a lower value). Preferably the ratio is less than half the critical value, to allow an adequate margin of safety. Provided these limits are observed, substantially identical results can be obtained compared with the use of a pure nitrogen atmosphere.

For coils of PVC-coated wires, and other PVC products of comparable compactness and surface-to-volume ratio, if the flexible containers are of reasonably low permeability (for example polyethylene bags of 500 gauge; 0,5 mm) it will often be sufficient to fill the bags in ambient air, avoiding unnecessary air space, and close by heat sealing or adhesive tape.

When this is insufficient to satisfy the oxygen ratio requirement, a more impermeable material may be used for the flexible containers; examples include laminates of PVC with either polyvinylfluoride or polyvinylidene fluoride, and laminates of polyethylene or of ethylenevinyl acetate copolymer with aluminium foil. Alternatively, or in addition, the volume of contained oxygen can be reduced by:

(1) filling unavoidable spaces with inert fillers, preferably hollow to minimise radiation absorbtion—inflated "balloons" of polyethylene film are ideal;

(2) reducing the volume of the flexible container by shrinking it onto the product, as by applying a small degree of suction to the interior (a high degree of suction is undesirable as encouraging leakage) or by using a heat-shrinkable film to form the container, or

(3) reducing the proportion of oxygen inside the container by injecting nitrogen or other inert gas (unless impermeability is very high, this should be done only shortly before irradiation commences).

In the case of materials that evolve gas (usually hydrogen) during irradiation, venting may be necessary; in some cases a pinhole may be adequate.

It will be apparent that the flexible container may need to be protected from abrasion before and possibly during irradiation; lightweight cartons or stout paper bags (either of which may form part of the final packaging in some cases) can be used for this purpose.

Example:

Five spools, each holding 400 m of twisted pair of PVC insulated wires, were sealed in a polyethylene bag formed from 500 gauge (0,5 mm low-density polyethylene "lay flat" tubing 305 mm wide and 480 mm long. One end of the tube was first sealed, the five spools were then inserted and the other end of the tube heat sealed.

From the dimensions of the package the internal volume was calculated to be 12200 $cm^3$.

The dimensions of the wire were: conductor diameter 0.5 mm; radial insulation 0.3 mm; overall

2

**0 077 620**

diameter 1.1 mm; volume 0.95 cm³/m; surface area 34.6 cm²/m; and the insulation was a conventional hard grade of irradiation cross-linkable PVC compound made from a vinyl chloride homopolymer of high molecular weight (K-value 70) produced by the suspension polymerisation process, a monomeric phthalate ester plasticiser, a polyfunctional methacrylate monomer acting as a crosslinking promoter, and a lead-based stabiliser.

The volume of the material in each spool was approximately 140 cm³, the volume of wire on each spool 760 cm³, and the total surface area of wire per spool was 2.76 m².

The total volume of wire and spool substance within the bag was therefore 4500 cm³ and consequently the volume of air entrapped within the bag was 12200−4500=7700 cm³. Thus the oxygen content of the bag was approximately 1540 cm³. The total surface area of the wires within the bag was 13.8 m² approximately and consequently the available oxygen to surface area ratio (AOR) was

$$1540/13.8=110 \text{ cm}^3/\text{m}^2$$

The bag was placed in a cardboard carton, to protect it from possible damage during handling, and was subjected to gamma radiation to receive a dose of 5 Mrad, equal to that normally given this product when processed in nitrogen filled metal containers.

For control purposes five additional spools of wire were placed in a similarly constructed bag, which was not sealed at one end, and were irradiated under identical conditions.

Subsequently about 30 samples of wire were taken from the spools in each bag and then were subjected to scrape abrasion tests and to a solvent extraction test. The results are shown in the table and are compared with the results obtained on identical wire processed to the same dose in nitrogen filled metal containers.

TABLE

| Sample | Test | |
|---|---|---|
| | Scrape abrasion strokes to failure | Toluene extraction % weight loss |
| Nitrogen control | 270 | 21.5 |
| Sealed bag | 280 | 20.6 |
| Unsealed bag | 227 | 25.7 |

Toluene extraction was estimated using a standard Soxhlet extraction apparatus using about 1 g. of 50 mm lengths of stripped insulation, refluxed in toluene for 20 hours, following by drying *in vacuo* for two hours at 100°C.

Wires from the unsealed bag showed a significantly lower scrape abrasion resistance and increase in extractables both results indicating a significant reduction in crosslinking of the insulation. The differences in the corresponding values obtained on the nitrogen controls and the sealed bag wires are within the normal experimental spread for this type of insulation and for practical purposes these wires would be considered to have identical properties.

**Claims**

1. A method of radiation processing a product made at least in part from an oxygen sensitive cross-linkable polymeric material comprising sealing the product in a flexible container and subjecting it to gamma irradiation therein, the volume and permeability of the flexible container being such that the ratio of the sum of the volume of oxygen contained in it and the volume of oxygen that would diffuse into it during the irradiation period to the exposed surface area of the polymeric material is less than a critical value determined empirically for the particular polymeric material.

2. A method of radiation processing PVC coated wire comprising sealing it in a flexible container and subjecting it to gamma irradiation therein, the volume and permeability of the flexible container being such that the ratio of the sum of the volume of oxygen contained in it and the volume of oxygen that would diffuse into it during the irradiation period and the exposed surface area of the PVC coating is less than 150 cm³ per m².

3. A method as claimed in Claim 2 in which the ratio referred to is less than 50 cm³ per m².

**Patentansprüche**

1. Verfahren zur Bestrahlung eines mindestens teilweise aus einem sauerstoffempfindlichen

3

vernetzbaren polymeren Material hergestellten Produkts, dadurch gekennzeichnet, daß man das Produkt in einem flexiblen Behälter einsiegelt und darin einer γ-Bestrahlung unterwirft, wobei das Volumen und die Durchlässigkeit des flexiblen Behälters so beschaffen sind, daß das Verhältnis der Summe der Volumina von darin enthaltenem und während der Bestrahlungsdauer hineindiffundierbarem Sauerstoff zur bestrahlten Oberfläche des polymeren Materials einen für das polymere Material spezifischen empirisch bestimmten kritischen Wert nicht übersteigt.

2. Verfahren zur Bestrahlung eines mit Polyvinylchlorid beschichteten Drahtes, dadurch gekennzeichnet, daß man den Draht in einem flexiblen Behälter einsiegelt und darin einer γ-Bestrahlung unterwirft, wobei das Volumen und die Durchlässigkett des flexiblen Behälters so beschaffen sind, daß das Verhältnis der Summe der Volumina von darin enthaltenem und während der Bestrahlungsdauer hineindiffundierbarem Sauerstoff zur bestrahlten Oberfläche der PVC-Beschichtung geringer ist als 150 $cm^3/m^2$.

3. Verfahren nach Anspruch 2, dadurch gekennzeichnet, daß das genannte Verhältnis geringer als 50 $cm^3/m^2$ ist.

**Revendications**

1. Procédé de traitement par un rayonnement d'un produit constitué au moins en partie d'un matériau polymère réticulable, sensible à l'oxygène, consistant à enfermer de façon étanche le produit dans un conteneur flexible et à l'y soumettre à une irradiation aux rayons gamma, le volume et la perméabilité du conteneur flexible étant tels que le rapport de la somme du volume d'oxygène que celui-ci contient et du volume d'oxygène qui y pénètre par diffusion au cours de la période d'irradiation à l'aire de la surface exposée du matériau polymère est inférieur à une valeur critique déterminée empiriquement pour le matériau polymère particulier.

2. Procédé de traitement par un rayonnement d'un fil revêtu de PVC, consistant à enfermer de façon étanche celui-ci dans un conteneur flexible et à l'y soumettre à une irradiation aux rayons gamma, le volume et la perméabilité du conteneur flexible étant tels que le rapport de la somme du volume d'oxygène que celui-ci contient et du volume d'oxygène qui y pénètre par diffusion au cours de la période d'irradiation à l'aire de la surface exposée du revêtement de PVC est inférieur à 150 $cm^3$ par $m^2$.

3. Procédé tel que revendiqué dans la revendication 2, dans lequel le rapport auquel on se réfère est inférieur à 50 $cm^3$ par $m^2$.